# EUROPÄISCHE PATENTANMELDUNG

(11) **EP 1 150 195 A2**
(43) Veröffentlichungstag der Anmeldung: **31.10.2001**
(21) Anmeldenummer: 01000126.1
(22) Anmeldetag: 26.04.2001
(51) Int. Cl.: G06F 1/00

(54) **Verfahren zur dynamischen Bestimmung von Zugriffsrechten**

(30) Priorität: 29.04.2000 DE 10021222
(71) Anmelder: Philips Corporate Intellectual Property GmbH, 52064 Aachen (DE); Koninklijke Philips Electronics N.V., 5621 BA Eindhoven (NL)
(72) Erfinder: Baumeister, Markus, 52064, Aachen (DE); Hauptmann, Steffen, 52064, Aachen (DE); Klabunde, Karin, 52064, Aachen (DE)
(74) Vertreter: Volmer, Georg, Dipl.-Ing.

(57) **Zusammenfassung**

Die Erfindung bezieht sich auf ein Netzwerk mit Terminals und einem auf allen Terminals verteilten Softwaresystem. Das Softwaresystem enthält wenigstens ein zugriffsgeschütztes Objekt (14) und ein Filter (9), welches zur Bestimmung der Zugriffstechte eines Benutzers für ein zugriffsgeschütztes Objekt (14) vorgesehen ist.

## Beschreibung

Die Erfindung bezieht sich auf ein Netzwerk mit Terminals und einem auf allen Terminals verteilten Softwaresystem.

Ein solches Netzwerk ist aus Ralf Steinmetz (Hrsg.): "Kommunikation in verteilten Systemen (KiVS)", 11. ITG/GI-Fachtagung, Darmstadt, 2.-5. März 1999; Stephan Abramowski, Heribert Baldus, Tobias Helbig: "Digitale Netze in Wohnungen - Unterhaltungselektronik im Umbruch", Seiten 340 bis 351, bekannt. Es werden in dieser Veröffentlichung Anforderungen für ein zukünftiges Netzwerk im Heimbereich mit der darin verwendeten Software beschrieben. Wie in einem solchen Netzwerk mit einem verteilten Softwaresystem Zugriffsbeschränkungen realisiert werden, wird nicht näher beschrieben.

Der Erfindung liegt die Aufgabe zugrunde, ein Netzwerk mit einem Softwaresystem zu schaffen, bei welchem die Zugriffsrechte des Benutzers bestimmt werden können.

Die Aufgabe wird durch ein Netzwerk der eingangs genannten Art dadurch gelöst,
dass das Netzwerk wenigstens ein zugriffsgeschütztes Objekt enthält, und
dass das Softwaresystem wenigstens ein Filter enthält, welches anhand erst zum Zugriffszeitpunkt vorhandener Daten zur Auswertung der Zugriffsrechte eines Benutzers für ein zugriffsgeschütztes Objekt vorgesehen ist.

Greift ein Benutzer oder ein Mitglied einer Benutzergruppe auf ein zugriffsgeschütztes Objekt des Netzwerks zu, wird mit Hilfe eines Filters überprüft, ob dieser Zugriff zulässig ist. Auf diese Weise können bestimmte Objekte, z.B. Geräte, Inhalte wie Filme oder Anwendungen gegen unerwünschte Zugriffe durch Benutzer geschützt werden. Der häufig erwünschte Schutz gegen unkontrollierte Zugriffe auf das Netzwerk durch Kinder kann durch das Filter realisiert werden.

Um die Zugriffsbedingungen auswerten zu können, benötigt das Filter bestimmte Daten. Diese Daten werden z.B. in Form von Parametern einer Nachricht dem Filter zugeführt und können eine Änderung der Zugriffsrechte durch das Filter bewirken. Einem Kind kann z.B. der Zugriff auf ein Fernsehgerät während des Zugriffs entzogen werden, falls die maximale Zeit für die Nutzung des Fernsehgerätes erreicht wurde.

Nach der Nutzungsaufnahme durch eine Anwendung wird ein Methodenaufruf an eine als Ressourcenmanager bezeichnete Softwarekomponente geschickt, welche Ressourcen wie Geräte, Inhalte, Nutzdaten, Verwaltungsdaten, Anwendungen verwaltet und eine Überprüfung der Zugriffsrechte veranlassen kann. Der Ressourcenmanager stellt fest, dass auf ein zugriffsgeschütztes Objekt zugegriffen werden muss, deshalb muss auf die Einhaltung der Zugriffsrechte geachtet werden. Aus diesem Grund veranlasst der Ressourcenmanager durch einen Methodenaufruf eine als Zugriffsrechtemanager bezeichnete Softwarekomponente, die Zugriffsrechte des Benutzers auf das gewünschte Objekt zu überprüfen. Falls der Zugriffsrechtemanager anhand einer Datenstruktur z.B. in Form eines Baumes oder einer Liste feststellt, dass der Einsatz eines Filters notwendig ist, wird das Filter durch eine Methode aktiviert.

Der für die Überprüfung der Zugriffsrechte notwendige Baum besteht aus mehreren Knoten, in denen die Benutzer mit der erlaubten Nutzung zu jeweils einem zugriffsbeschränkten Objekt definiert werden.

Ein Ausführungsbeispiel der Erfindung wird nachstehend anhand der Figuren näher erläutert. Es zeigen:
- Fig. 1: ein Netzwerk mit verschiedenen Terminals,
- Fig. 2: verschiedene Softwareebenen des im Netzwerk verwendeten Softwaresystems
- Fig 3: prinzipielle /funktionelle Darstellung eines Filters

- Fig 4: Zeichengabeablaufdiagramm zur zeitlichen Darstellung der Reihenfolge der Aktionen während einer Ressourcen-Reservierung
- Fig. 5: Zeichengabeablaufdiagramm zur zeitlichen Darstellung der Reihenfolge der Aktionen während eines Widerrufs der Zugriffsrechte
- Fig. 6: softwaremäßige Struktur bzw. Datenstruktur der Objekte in Form eines Baumes

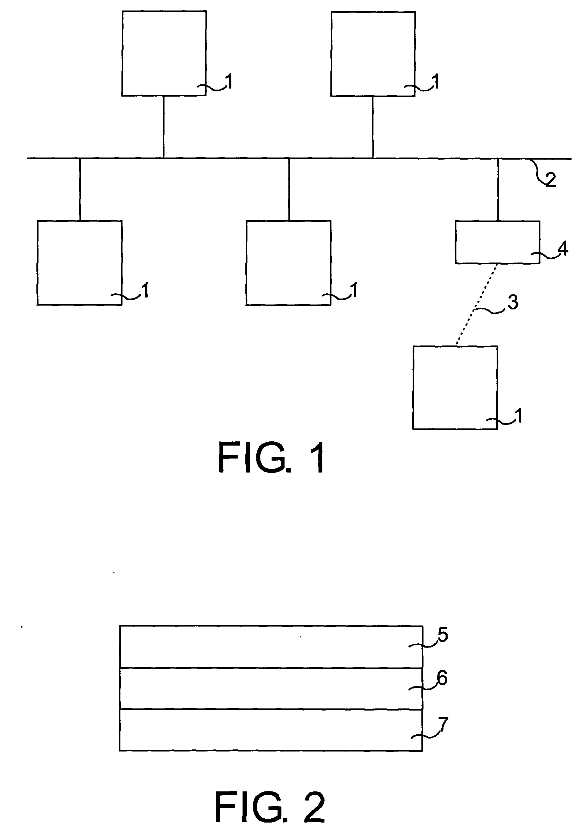

Fig 1 zeigt ein Netzwerk, welches verschiedene Terminals 1 über ein Bussystem 2 miteinander koppelt. Die Terminals 1 können auch über eine drahtlose Verbindung 3 und eine Sende-/Empfangsstation 4 mit dem Bussystem 2 gekoppelt werden. Hierbei können z.B. Infrarot-, Ultraschall- oder Funkverbindungen verwendet werden.
Solche Terminals können PCs und Geräte der Unterhaltungselektronik, wie zB. Fernsehgerät, Set-Top-Box, Tuner, Kamera, digitaler Videorecorder, CD-Spieler sein.

Der Benutzer startet an einem Terminal 1 mit Hilfe eines auf allen Terminals 1 enthaltenen, verteilten Softwaresystems eine gewünschte Anwendung im Netzwerk.

In Fig. 2 ist das Softwaresystem dargestellt, welches aus verschiedenen Softwareebenen besteht, die auf das Betriebssystem aufsetzten. Die oberste Softwareebene ist eine Anwendungsebene 5. Die folgende Softwareebene ist eine Infrastrukturebene 6 und die unterste Softwareebene ist eine Netzwerkebene 7.

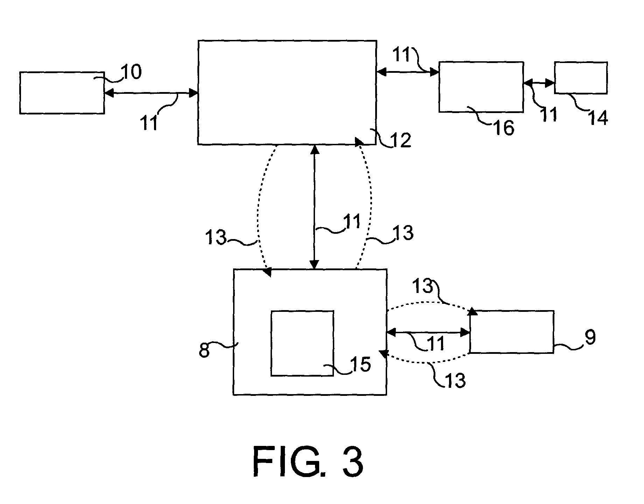

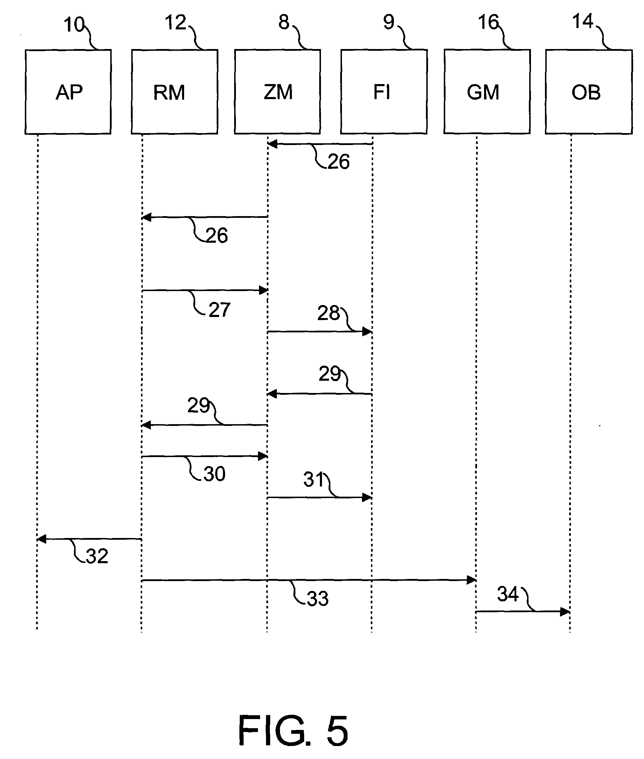

Die Infrastrukturebene 6 mit Softwarekomponenten zur Infrastrukturverwaltung enthält einen Zugriffsrechtemanager 8 und ein Filter 9, das ein zur dynamischen Bestimmung und Auswertung der Zugriffsrechte ist (Fig. 3). Zugriffsrechte, die z. B. die Benutzung, Änderung, Löschung betreffen, und von keinen dynamischen Größen abhängen, lassen sich statisch im Vorfeld festlegen. Andere Zugriffsrechte, die von dynamischen Größen wie zB. die Kostenlimitierung für Internetzugriff, Zeitlimits für Fernsehen oder Beschränkungen des Zugriffs auf bestimmte Inhalte abhängen, können nicht im Vorfeld bestimmt werden, und außerdem können sich die Zugriffsbedingungen während des Zugriffs ändern. Eine Aufzählung aller Objekte für die ein Zugriff verboten bzw. erlaubt ist, ist in einigen Fällen (z.B. alle erlaubten Filme) nicht möglich, deshalb müssen die Zugriffsrechte zum Zugriffszeitpunkt überprüft werden (bei Filmen z.B. anhand der Klassifizierung). Um die Zugriffsrechte dynamisch während eines Zugriffs festzulegen, benötigt das Filter 9 aktuelle Daten (dynamische Größen), die eine zusätzliche Information (aktuelle Zeitangaben, Kostenübersicht zum Zugriffszeitpunkt, etc.) darstellen. Das Filter überwacht die Veränderung der Zugriffsrechte und löst den Widerruf des Zugriffs aus. Ändern sich die Zugriffsrechte während des Zugriffs, z.B. ist die maximale Zeit für die Benutzung des Fernsehgerätes abgelaufen, muss das Filter den Widerruf der Zugriffsrechte veranlassen (Fig. 5). Zuvor würde es in diesem Beispiel dem Benutzer eine Warnung, dass die verbleibende Zeit sich dem Ende nähert, zukommen lassen oder ihn bereits bei Beginn der Anwendung über die verbleibende Zeit informieren.

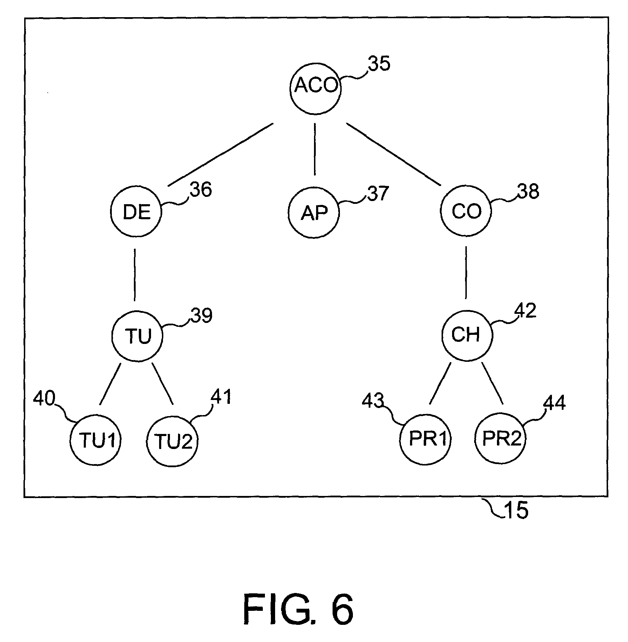

Fig. 3 verdeutlicht die Funktion des Filters. Während einer Nutzungsaufnahme wird eine Anwendung 10 durch einen Benutzer des Netzwerks gestartet. Mit einer Anfrage in Form einer Methode 11 an einen Ressourcenmanager 12, der für die Einhaltung der Zugriffsrechte zu den von ihm verwalteten Ressourcen sorgt, fordert die Anwendung 10 die benötigten Ressourcen an. Hierbei wird die Menge aller unterschiedlicher Methodenaufrufe und -wiedergaben, durch die mit den Bezugszeichen 11 dargestellten Doppelpfeile, repräsentiert und wird im folgendem vereinfacht als Methode 11 benannt. Analog repräsentieren die mit Bezugszeichen 13 dargestellten Pfeile die Menge aller unterschiedlicher Nachrichten und wird vereinfacht als Nachricht 13 benannt. Der Ressourcenmanager 12 schickt eine Anfrage in Form einer Methode 11 an einen Zugriffsrechtemanager 8, ob ein Zugriff des Benutzers zulässig ist oder nicht. Mit Hilfe einer strukturellen Anordnung von Objekten 14 in Form eines Baumes 15 (Fig.6), welcher sich innerhalb des Zugriffsrechtemanagers 8 befindet, werden die Zugriffsrechte des Benutzers auf ein ausgewähltes Objekt 14 überprüft. Falls der Zugriffsrechtemanager 8 feststellt, dass der Einsatz eines Filters 9 notwendig ist, wird dieser mit einer Methode 11 gestartet. Das Ergebnis des Filters 9 wird in Form einer Methode 11 bis zur Anwendung 10 geliefert. Wenn die Bestätigung der Zugriffsrechte den Ressourcenmanager 12 erreicht hat, stößt dieser mit einer Methode 11 einen Gerätemanager 16 an, der im Gegensatz zum Ressourcenmanager 12 nur für die Verwaltung der Geräte ohne Überprüfung der Zugriffsrechte zuständig ist. Der Gerätemanager 16 reserviert durch eine Methode 11 ein gewünschtes Objekt 14 und schickt eine entsprechende Antwort durch eine Methode 11 über den Reservierungsstatus an den Ressourcenmanager 12. Falls sich die Zugriffsrechte während des Zugriffs als Folge einer Änderung bestimmter Daten (z. B Zeit, Kosten der Nutzung) ändern, wird eine Nachricht 13 vom Filter 9, das laufend über bestimmte Ereignisse (z.B. Zeit, etc.) im Netz informiert wird, an den Zugriffsrechtemanager 8 verschickt, der wiederum den Ressourcenmanager 12 informiert.

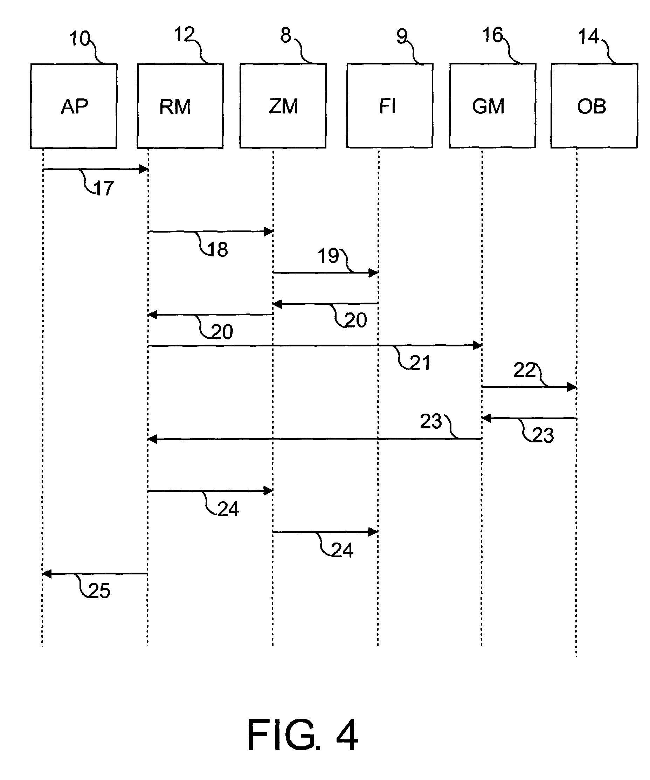

In Fig. 4 ist die zeitliche Reihenfolge der Aktionen während einer Ressourcen-Reservierung beschrieben. Um eine Ressource zu reservieren stellt die Anwendung (AP) 10 eine Anfrage 17 an den Ressourcenmanager (RM) 12. Bevor die Reservierung stattfindet, müssen die Zugriffsrechte des Benutzers auf das Objekt 14 überprüft werden. Aus diesem Grund wird eine weitere Anfrage 18, welche u.a. die Art der angestrebten Nutzung beinhaltet, an den Zugriffsrechtemanager (ZM) 8 gestellt. Nachdem der Zugriffsrechtmanager 8 festgestellt hat, dass die Zugriffsrechte für das angeforderte Objekt mit Hilfe eines Filters bestimmt werden müssen, wird die Aktivierung 19 des Filters (FI) 9 veranlasst. Durch eine Methode 20 wird eine entsprechende Antwort über den Zugriffsrechtemanager 8 zum Ressourcenmanager 12 signalisiert. Mit einer Anfrage 21 an den Gerätemanager (GM) 16 wird die eigentliche Reservierung gestartet. Gerätemanager 16 sendet einen Reservierungsbefehl 22 an das Objekt (OB) 14. Das Objekt 14 schickt dem Gerätemanager 16 einen Reservierungsstatus 23, der an den Ressourcenmanager 12 weiter geleitet wird. Der Ressourcenmanager 12 informiert durch eine Nachricht 24 den Zugriffsrechtemanager 8 über die Reservierung (Allokation) der Ressource. Diese Nachricht 24 wird an das Filter 9 weitergeleitet. Der Ressourcenmanager 12 teilt durch eine Nachricht 25 der Anwendung 10 die erfolgreiche Reservierung mit.

Fig 5 stellt die zeitliche Reihenfolge der Aktionen, die zu einem Widerruf der Zugriffsrechte während eines Zugriffs führen, dar. Das Filter 9 erzeugt eine Nachricht 26, die eine Änderung der Zugriffsrechte signalisiert und schickt diese an den Zugriffsrechtemanager 8. Daraufhin informiert der Zugriffsrechtemanager 8 den Ressourcenmanager 12 über eine Änderung der Zugriffsrechte. Der Ressourcenmanager 12 veranlasst eine erneute Überprüfung der Zugriffsrechte, um festzustellen, wie sich die Zugriffsrechte verändert haben. Er schickt eine Nachricht 27 an den Zugriffsrechtemanager 8, der eine entsprechende Anfrage 28 an das Filter 9 richtet. Das Filter 9 stellt fest, dass kein Zugriff mehr erlaubt ist und sendet einen Widerruf 29 an den Zugriffsrechtemanager 8, welcher den Widerruf 29 an Ressourcenmanager 12 weiterleitet. Der Ressourcenmanager 12 informiert mit einer Nachricht 30 den Zugriffsrechtemanager 8 über die Freigabe der Ressource. Der Zugriffsrechtemanager 8 wiederum benachrichtigt mit einer Nachricht 31 das Filter 9 über die Freigabe der Ressource. Im weiteren Verlauf wird die Anwendung 10 über eine Nachricht 32 vom Ressourcenmanager 12 informiert, dass der Zugriff nicht mehr möglich ist. Der Gerätemanager 16 wird vom Ressourcenmanager 12 mit einer Aufforderung 33 beauftragt, die Ressource frei zu geben. Der Gerätemanager 16 schickt eine entsprechende Nachricht 34 an das Objekt 14.

In Fig. 6 wird beispielhaft der Baum 15 vorgestellt. Er besteht aus mehreren Knoten 35 bis 44, in denen sich zu einem bestimmten Objekt 14 gehörende Aufzählung (Liste) der Zugriffsrechte für einzelne Benutzer oder Benutzergruppen befindet. Die Knoten sind hierarchisch angeordnet d.h. wenn der Benutzer nicht in einem bestimmten Knoten eines Objekts 14 gefunden wurde, aber in dem darüber liegenden Knoten eingetragen ist, gelten die Zugriffsrechte des oberen Knotens. Der Benutzer hat Zugriff auf die Objekte 14 der unteren Knoten.

In diesem Beispiel enthält der oberste Knoten 35 des Baumes 15 die Liste der erlaubten Benutzer aller zugriffsbeschränkten Objekte 14 (ACO). Die darunter liegenden Knoten enthalten jeweils die erlaubten Benutzer aller Geräte (DE), Knoten 36, aller Anwendungen (AP), Knoten 37 und aller Inhalte (CO), Knoten 38. Der unter dem Knoten 36 liegende Knoten 39 enthält die Liste aller erlaubten Benutzer aller Tuner (TU). In diesem Beispiel existieren zwei Tuner, deshalb unterliegen dem Knoten 39 die Knoten 40 erster Tuner (TU1) und Knoten 42 zweiter Tuner (TU2) jeweils mit der Liste der erlaubten Benutzer des ersten bzw. zweiten Tuners. Unter dem Knoten 38 befindet sich der Knoten 42 mit der Liste aller erlaubten Benutzer der Inhalte in jedem Fernsehprogramm (CH). Der darunter liegende Knoten 43 beinhaltet die Liste der erlaubten Benutzer des ersten Programms (PR1) und der Knoten 44 des zweiten Programms (PR2) beinhaltet die erlaubten Benutzer des zweiten Programms. Ein Benutzer (z.B. Max) möchte Fernsehen gucken (z.B. PR1, das über den ersten Tuner (TU1) verfügbar ist). Die Anwendung 10 stellt fest, dass eine bestimmte Ressource zur Ausführung der gewünschten Anwendung benötigt wird, deshalb schickt sie eine Anfrage in Form eines Methodenaufrufs an den Ressourcenmanager 12, die entsprechende Ressource zu reservieren. Da der Tuner (TU1) ein zugriffsgeschütztes Objekt ist, veranlasst der Ressourcenmanager 12 den Zugriffsrechtemanager 8 die Zugriffsrechte zu überprüfen, indem er einen Methodenaufruf mit der Art (hier Benutzung) der gewünschten Nutzung an den Zugriffsrechtemanager 8 schickt. Der Zugriffsrechtemanager 8 benutzt für die Bestimmung der Zugriffsrechte den erwähnten Baum 15 und prüft, ob Max in der Liste des Knotens 40 aufgeführt ist. Falls dies der Fall ist und der Zugriffsrechtemanager 8 feststellt, dass die Zugriffsrechte für Tuner (TU1) mit Hilfe des Filters 9 bestimmt werden müssen (z.B. da Max nur eine Stunde täglich das Fernsehgerät nutzen darf), wird das Filter 9 durch den Zugriffsrechtemanager 8 über einen Methodenaufruf aktiviert und nach geltenden Zugriffsrechten befragt. Im Falle, dass Max nicht in dem Knoten 40 aufgeführt wird, wird sein Name in dem darüber liegenden Knoten 39 gesucht. Dieser Vorgang wird solange wiederholt, bis der Name Max in einem der Knoten gefunden wurde, oder der Vorgang wird am obersten Knoten beendet. Falls der Name in einem der oberen Knoten enthalten ist, gelten die Zugriffsrechte des oberen Knotens. Ist der gewünschte Zugriff gültig wie in diesem Beispiel, dann schickt das Filter 9 eine entsprechende Nachricht über den Zugriffsrechtemanager 8 an den Ressourcenmanager 12. Mit dieser Nachricht signalisiert das Filter 9, dass es sich um ein dynamisches Zugriffsrecht handelt, das sich im Laufe der Zeit ändern kann. Mit Hilfe des Gerätemanaers 16 reserviert der Ressourcenmanager 12 das gewünschte Objekt 14. Das Objekt 14 teilt über eine Nachricht den Reservierungsstatus dem Gerätemanager 16 mit und dieser leitet sie an den Ressourcenmanager 12 weiter. Der Ressourcenmanager 12 benachrichtigt sowohl die Anwendung 10 als auch den Zugriffsrechtemanager 8 und dieser das Filter 9 über die erfolgreiche Reservierung des Objekts 14.

## Patentansprüche

1. Netzwerk mit Terminals und einem auf allen Terminals verteilten Softwaresystem,
**dadurch gekennzeichnet,**
**dass** das Netzwerk wenigstens ein zugriffsgeschütztes Objekt (14) enthält, und
**dass** das Softwaresystem wenigstens ein Filter (9) enthält, welches anhand erst zum Zugriffszeitpunkt vorhandener Daten zur Auswertung der Zugriffsrechte eines Benutzers für ein zugriffsgeschütztes Objekt (14) vorgesehen ist.

2. Netzwerk nach Anspruch 1
**dadurch gekennzeichnet,**
**dass** das Filter (9) während des Zugriffs auf das zugriffsgeschützte Objekt zur Auswertung zusätzlich auftretender Daten vorgesehen ist, und
**dass** das Filter zur Überwachung der Veränderung der Zugriffsrechte und zum Auslösen des Widerrufs des Zugriffs auf das zugriffsgeschützte Objekt vorgesehen ist.

3. Netzwerk nach Anspruch 2
**dadurch gekennzeichnet,**
**dass** in dem Softwaresystem nach Nutzungsaufnahme durch eine Anwendung (10) mittels einer Methode (11) eine als Ressourcenmanager (12) bezeichnete Softwarekomponente zur Einhaltung der Zugriffsrechte vorgesehen ist.

4. Netzwerk nach Anspruch 3
**dadurch gekennzeichnet,**
**dass** das Softwaresystem eine als Zugriffsrechtemanager (8) baichnete Softwarekomponente enthält, die zusammen mit dem Filter (9) durch den Ressourcenmanager (12) zur Überprüfung der Zugriffsrechte beauftragt werden.

5. Netzwerk nach Anspruch 4
**dadurch gekennzeichnet,**
**dass** der Zugriffsrechtemanager (8) eine Datenstruktur in Form eines Baumes (15) zur Anordnung von zugriffsgeschützten Objekten (14) enthält, und
**dass** der Baum (14) aus mehreren Knoten (35 bis 44) besteht, die jeweils eine Aufzählung von erlaubten Benutzern bzw. Benutzergruppen eines zugriffsgeschütztes Objekts und zu jedem Benutzer bzw. jeder Benutzergruppe eine Aufzählung der Art und Weise der Nutzung enthalten.
